# EUROPEAN PATENT SPECIFICATION

(11) **EP 2 947 048 B1**
(45) Date of publication and mention of the grant of the patent: **21.12.2022**
(21) Application number: 14740442.0
(22) Date of filing: 20.01.2014
(51) Int. Cl.: C01B 32/00, C01B 32/21, C01B 32/23, C01B 32/225, C04B 35/536, C04B 38/00

(54) **METHOD FOR PRODUCING LOW-DENSITY MATERIALS AND A LOW-DENSITY MATERIAL**
VERFAHREN ZUR HERSTELLUNG VON MATERIALIEN MIT GERINGER DICHTE UND MATERIAL MIT GERINGER DICHTE
PROCÉDÉ DE PRODUCTION DE MATÉRIAUX DE FAIBLE DENSITÉ ET MATÉRIAU DE FAIBLE DENSITÉ

(30) Priority: 18.01.2013 RU 2013102184
(43) Date of publication of application: 25.11.2015
(73) Proprietor: Joint-Stock Company Unichimtek (AO Unichimtek), Podolsk, Moscow region 142181 (RU)
(72) Inventor: SOROKINA, Natalija Evgenievna, Moscow 119607 (RU); MALAKHO, Artjom Petrovich, Moscow 117321 (RU); FILIMONOV, Stanislav Vladimirovich, Stavropolskjj krajj g. Nevinnomyssk 357111 (RU); PAVLOV, Aleksandr Alekseevich, Moscow 129041 (RU); AVDEEV, Viktor Vasilievich, Moscow 117777 (RU)
(74) Representative: Glawe, Delfs, Moll
(86) International application number: PCT/RU2014/000029
(87) International publication number: WO 2014/112901

(56) References cited:
- WO-A1-02/096615
- FR-A1- 2 849 651
- GB-A- 2 128 971
- RU-C1- 2 398 738
- RU-C1- 2 422 406
- RU-C1- 2 432 634
- RU-C2- 2 370 438
- US-A- 4 244 934
- US-A1- 2005 051 538
- AFANASOV I M ET AL: "Graphite structural transformations during intercalation by HNO3 and exfoliation", CARBON, ELSEVIER, OXFORD, GB, vol. 48, no. 6, 1 May 2010 (2010-05-01), pages 1862-1865, XP026926494, ISSN: 0008-6223, DOI: 10.1016/J.CARBON.2010.01.055 [retrieved on 2010-02-01]

## Description

### Field of the invention

The present invention is defined in the claims and relates to the field of producing low-density, high-strength materials based on thermally expanded graphite that can be used for heat distribution, including, inter alia, in a range of high temperatures.

### Prior art

The prior art of this invention includes quite a number of works dedicated to the study of the thermal conductivity of products made of thermally expanded graphite (hereinafter - TEG) .

It is known that, by subjecting TEG particles to pressure, unique products can be obtained that possess properties not possesses by traditional graphite. Sheets made of TEG possess good elasticity, high electrical and thermal conductivity in the longitudinal direction as related to the sheet.

Patent US 7,132,629 discloses a material in the form of a plate made of compressed TEG without a binder, wherein the material possesses a thermal conductivity in the direction parallel to its surface of at least 50% higher than the thermal conductivity in the perpendicular direction.

The method of producing such material disclosed in the said patent includes preliminary compression of continuously supplied TEG between textile bands, subsequent optional rolling of the pre-compressed workpiece between rollers, and subsequent finishing of the obtained web, e.g. cutting, coating, impregnation etc.

As follows from the specification of the said technical solution, the use of the claimed material allows faster heating and uniform distribution of temperature with fewer heating elements than in plates made of ordinary gypsum. Besides, the production process is made simpler as compared with, for example, the process of producing isotropic materials, the latter requiring all-dimensional rather than one-dimensional TEG compression. US 4,244,934 discloses a process for producing a flexible graphite product including an oxidizing treatment with nitric acid on graphite particles, a step of thermal expansion and a step of compression of the obtained product. The obtained flexible graphite product is excellent in heat resistance and chemical inertness, it is free from contamination with sulfur and chlorine and the density of the final product is from 0.8 to 1.8 g/ cm³.

The present invention pursues the goal of creating an anisotropic material with high thermal conductivity in one preferred direction, namely parallel to its surface, which will allow using the material in building elements, such as floors, ceilings, walls etc. Such building elements may comprise cooling or heating systems that include, e.g., radiator tubes made of heat-conducting metal. Such tubes would be inserted between two sheets of the known material to obtain a TEG monoblock with metal tubes in it.

The prior art patent does not discuss the earlier history of obtaining TEG, which is used to produce low-density material, whereas it is important to know by which method TEG has been produced in order to obtain a high-quality material meeting all operational specifications.

TEG is produced from intercalated graphite, which in turn is produced by treating natural graphite with strong oxidants in the presence of acids. If it is sulfuric acid that is used, the material will inevitably contain compounds of sulfur exhibiting corrosive action in respect of metal parts contacting the low-density material. If it is nitric acid that is used, the material will not contain compounds of sulfur, but it may contain sorbed nitric oxides possessing a no less corrosive action.

Correspondingly, a water extract from thermally expanded graphite obtained by traditional processes is characterized by acid pH values (< 7).

The TEG corrosive action can be improved, if neutralization of corrosive compounds is performed; a TEG-based water extract will then exhibit neutral and basic pH values (> 7). The material according to the cited patent is characterized by a strong anisotropy of thermal conductivity, whereas it is known from literature that anisotropy of thermal conductivity occurs under sufficiently high TEG density, while in low-density materials, anisotropy disappears. However, the higher the density of a material, the harder it is to form a monoblock out of two plates of such a material: the adhesion between TEG particles deteriorates and requires the application of a binding agent.

The way out is to use plates of low-density TEG with correspondingly low anisotropy, since only such plates will have a sufficiently developed surface resulting to improved plate adhesion. The problem here is that the plates themselves are not strong enough and disintegrate easily.

### Disclosure of the invention

The invention is set out in the appended claims. The embodiments of the description which do not fall within the scope of said claims are provided for illustrative purposes only and do not form part of the present invention.

The purpose of the present invention is to propose an environmentally clean process of producing low-density thermally conductive material made of TEG possessing high strength and elasticity properties, in particular, flexural strength and elasticity modulus, that does not contain acid admixtures corrosive to metal, and whose water extract, correspondingly, is characterized by neutral or basic pH values.

Other advantages of the invention will become clear from the disclosure below.

The goal set is achieved by a method as defined in claim 1, i.e. a method of producing a low-density thermally conductive material out of thermally expanded graphite that does not contain acid admixtures corrosive to metal, and whose water extract is characterized by neutral or basic pH values, wherein said method includes the following stages:
(A) obtaining hydrolyzed graphite nitrate particles by chemical or electrochemical interaction of natural graphite with nitric acid and subsequent hydrolysis by washing with water;
(B) obtaining particles of thermally expanded graphite by heating particles of hydrolyzed graphite nitrate washed with water with a specific heat equal to or exceeding 4.7 KJ/g but not exceeding 12 KJ/g in an atmosphere of liquid or gaseous fuel combustion products in the air, with an air-fuel equivalence ratio λ being in the range of from 0.8 to1.1;
(C) subsequently compacting said thermally expanded graphite to an apparent density of from 0.03 to 0.1 g/cm³.

In particular embodiments of the invention, the set goal is achieved by a method, in which, prior to heating, particles of milled graphite foil waste are added to the particles of hydrolyzed graphite nitrate at stage A in an amount not exceeding 15 mass %.

In preferred embodiments of the invention, the heating at stage B is recommended to be conducted with a specific heat of from 6 to 12 KJ/g, and compacting at stage C to be performed up to a density of 0.05-0.06 g/cm³.

Compacting at stage C may be performed by rolling.

In that case, following stage C, a finishing processing is performed by cutting the material into cut-to-length workpieces.

In particular embodiments of the invention, at least two cut-to-length workpieces are subjected to joint compression to obtain a monolithic material.

In other embodiments of the invention, compacting at stage C is performed by one-dimensional compression.

The set goal is also achieved with the help of a low-density thermally conductive material obtained in accordance with the method disclosed above.

In particular embodiments of the invention, the set goal is also achieved by such material manufactured in the form of a long-length piece with a width of up to 1,500 mm.

The essence of the invention consists in the following.

The basis of the low-density heat-conducting material hereof consists of TEG made of hydrolyzed graphite nitrate particles washed in water by heating with a specific heat equal to or exceeding 4.7 KJ/g but not exceeding 12 KJ/g in an atmosphere of liquid or gaseous fuel combustion products in the air, the air-fuel equivalence ratio λ being in the range of 0.8-1.1, and subsequently compacting the material to a certain pre-determined density.

The above-said hydrolyzed graphite nitrate particles are obtained by using nitration processes, which means processes of obtaining intercalated graphite by the interaction of the initial graphite with a nitric acid solution to produce graphite insertion compounds, and their subsequent hydrolysis as defined in step (A) of claim 1.

Two types of interaction are possible under such processes: the chemical one, which is performed by direct interaction with nitric acid, and the electrochemical one, wherein anodic oxidation of graphite is performed in nitric acid solutions along with the application of electric current.

To obtain thermally expanded graphite ensuring the attainment of the claimed technical result, it is important to bring together all the three factors: the use of graphite nitrate for thermal expansion; the use of products of fuel combustion in the air with an air-fuel equivalence ratio λ of 0.8-1.11 as an atmosphere in which thermal expansion is conducted; and specific heat with which thermal expansion of graphite is performed.

The air-fuel equivalence ratio means the ratio of the actual amount of air in the fuel mixture to the theoretical amount needed for full combustion thereof.

In the most general case, it is necessary to supply as much air as is needed for the fuel to burn completely. If the fuel does not burn completely under the shortage of air, the exhaust gas will contain hydrocarbons, carbon monoxide and other potentially explosive components. That is why, for heating TEG in an atmosphere of fuel combustion products, it is recommended to conduct heating with an air-fuel equivalence ratio λ of over 1.

However, the heating of hydrolyzed graphite nitrate is possible in a liquid or gaseous fuel combustion atmosphere with an air-fuel equivalence ratio λ of less than 1.

In this case, to heat graphite nitrate, not only the oxygen of the feed air is used as fuel oxidant, but also nitrogen oxides that are inevitably generated under graphite nitrate thermolysis. In that case, a "shock" heating of particles is ensured at maximum temperatures, and an atmosphere is created that ensures the obtaining by TEG of neutral or weakly basic properties: basic at 0.8< λ<1.0 and neutral at 1.0< λ<1.1.

The alkaline reaction of the atmosphere is caused by the reduction of nitrogen (NO)x to NH₃ in the following reactions:

4C + N₂0 +3H₂0 = 2NH₃ + 4CO,

or

2C + N₂0 +3H₂0 = 2NH₃ + 2C0₂.

By conducting the process in the claimed atmosphere, there is also an increase of yield in terms of carbon, since the amount of carbon burn-out is decreased, and the produced TEG is characterized by neutral or weakly basic pH. Also, the environmental situation is improved because nitrogen oxides are utilized.

This atmosphere imparts the said useful properties only to TEG with nitrate history; where TEG is obtained from intercalated graphite produced, e.g. according to the sulfate technology, such properties are not attained.

However, the attainment of neutral or basic pH is also influenced by the value of specific heat: the higher the specific heat, the greater the pH value of the water extract of the produced TEG. In selecting the parameters of heating (atmosphere composition and specific heat), the following consideration were also taken into account.

If the air-fuel equivalence ratio is higher than 1.1, the foaming temperature will sharply decline, and graphite foam with low bulk density will be impossible to obtain.

If the air-fuel equivalence ratio is lower than the claimed range, the optimal conditions for natural gas combustion will not be created, and besides, the arising mixture of natural gas and air will be potentially explosive.

The foaming in the claimed atmosphere at the specific heat values of at least 4.7 KJ/g makes it possible, virtually instantaneously, to create a significant pressure of the gas-and-steam phase inside the hydrolyzed graphite nitrate particles that defines the degree of their expansion: the higher the pressure, the greater the expansion. It is caused by the need to create conditions for instantaneous evaporation and boiling of nitric acid solutions. The latter (nitric acid, water and solutions thereof) are reagents with low boiling temperatures: 100°C for water and 86°C for steaming nitric acid.

The upper limit for the specific heat range is 12KJ/g. : the higher the specific heat, the more developed TEG particle surface, and the better particle adhesion during compacting, which means a higher strength of the obtained material. Thus any upper limits for the specific heat range for the claimed purposes may be imposed only by the functionality of heating devices; however, experience shows that when specific heat is increased too much, the process of TEG production becomes much more expensive, so that heating with specific heats of over 12 KJ/g renders the process economically unfeasible on an industrial scale due to increased energy consumption.

TEG particles obtained under such heating are characterized by a bulk density of no more than 5 g/l, and as a rule no more than 2.5 g/l, crystallite sizes along the c-axis of 22-36 nm, an aspect ratio of at least 20 (the ratio of a TEG particle length to its diameter), and a very developed surface of 40 to 150 m²/g. The latter two parameters characterize the conditions for effective particle adhesion during compacting to the claimed density (0.03 to 0.1 g/cm³), and the creation of a sufficient number of van der Waals interactions among particles to obtain a monolith with satisfactory strength in a wide range of densities, including the low-density region. The size of graphite foam crystallites is sufficient to ensure thermal conductivity at the level of up to 8 W/mK. Such combination of characteristics does not only provide an opportunity to obtain sheets by rolling with a width of up to 1,500 mm, but also to ensure better properties: adhesion to each other of two low-density plates made of such sheets, and also their adhesion with metal elements and uniform distribution of such elements throughout the volume of a monolith made of TEG without the need for additional binders.

Compacting in the present invention means consolidation of graphite particles under pressure to obtain a uniform, in terms of density, material possessing sufficient strength (0.03 to 0.1 g/cm³).

At a density of less than 0.03 g/cm³, the claimed material will not possess sufficient strength to maintain its shape, while at a density of over 0.1 g/cm³, no monolith made of two or more sheets of the claimed material can be obtained for the reason that adhesion between the sheets will be unsatisfactory.

Compacting may be performed by any known methods, including compression or rolling.

Rolling may be conducted by the traditional technology: at first, loose TEG is compacted by passing it through two band transporters, and then the obtained workpiece is passed through rolls. In that case a continuous sheet is produced, which later can be cut to length into separate plates.

In other instances, compacting may be performed by one-dimensional compression in a mould. For that purpose, TEG powder is placed in the mould matrix, and compression is performed by a moving die to obtain an item with a pre-set density and shape.

In particular embodiments of the invention, the preferred method is compacting to a density of 0.05-0.06 g/cm³. In this case, a structure of material with the least anisotropy of properties is obtained, including thermal conductivity. It is known from literature that isotropic to anisotropic transition for TEG lies in the region of about 0.05 g/cm³.

In particular embodiments of the invention, milled graphite foil waste in an amount of up to 15 mass % may be added to intercalated graphite compounds in the form of hydrolyzed graphite nitrate. That quantity is selected based on the condition of sufficient thermal expansion going on, so that compacting would produce the claimed density.

The invention is performed as follows.

To perform the method, hydrolyzed graphite nitrate obtained by chemical or electrochemical interaction of natural graphite with nitric acid was taken, and the obtained intercalated graphite compounds were subsequently hydrolyzed. This intercalated graphite was subjected to a thermal shock with a specific heat equal to or exceeding 4.7 KJ/g. The heating was conducted in an injector-type device with a gas burner. The foaming was performed in an atmosphere of liquid or gaseous fuel combustion products in the air with an air-fuel equivalence ratio λ of 0.8-1.1 in terms of fuel. For the purposes of the invention, any acceptable liquid or gaseous fuel may be used: e.g. petroleum-based fuels, such as diesel, kerosene, ligroine, petrol, gasoline etc.; alcohols, such as ethanol, methanol, propanol etc.; or, to speak of gaseous fuels, such as propane, butane, methane, natural gas, shale gas, mine gas, marsh gas, biogas, compressed natural gas etc., e.g. of the following composition among others: CH₄ = 88.5%, C₂H₆ = 4.7%, C₃H₈ = 1.6%, C₄H₁₀ = 0.2%, N₂ = 5%.

The heating capacity of the burner device was 22-30 KW, and the foaming temperature was 1,000-1,600°C.

As a result, TEG with a bulk density of 1-5 g/l, carbon content of over 99.7% and pH=7-8 was obtained.

The obtained TEG was then subjected to compacting to produce a material with a density of 0.03-0.1 g/cm³.

### Example 1.

Hydrolyzed graphite nitrate was obtained by treating natural graphite with 98% nitric acid at a mass ratio of 1:0.6 for 1 hour and subsequent hydrolysis thereof by washing with water; the obtained hydrolyzed graphite nitrate was dried. The dry free-flowing material was fed to the bunker of the foaming device equipped with a gas burner. For fuel, a liquefied propane-butane mixture was used. Foaming was performed with the specific heats of 4.7 and 6 KJ/g in an atmosphere of propane-butane mixture combustion products with an air-fuel equivalence ratio of 0.8. Thermally expanded graphite was obtained with a bulk density of 3 g/l and 2.2 g/l, respectively, with a carbon content of over 99.8% and pH=7.5. Further, the thermally expanded graphite was used to produce, by means of rolling, continuous sheet workpieces with a width of 1,500 mm. The density of the workpieces was in both cases brought to 0.06 g/cm³.

The obtained workpiece was cut into cut-to-length plates. The thermal conductivity of the cut-to-length plates was as follows: perpendicular to plate: 3.74 and 3.48 W/mK, parallel to plate: 4.8 and 4.0 W/mK, flexural strength: 38, 5 and 45 KPa, elasticity module (compression): 0.32 and 0.38 MPa.

The two plates were put together and subjected to joint compression to obtain a monolithic material.

The obtained monolith was characterized by the absence of a clear boundary between the layers.

### Example 2.

To perform the invention, hydrolyzed graphite nitrate was obtained by electrochemical processing of natural graphite in 65% nitric acid at a quantity of electricity of 500 mA per 1 kg of graphite, then hydrolyzed by washing in water and dried. The obtained intercalated graphite was fed to the bunker of a foaming device equipped with a gas burner. Foaming was conducted at the specific heat of 12 KJ/g in an atmosphere of natural gas combustion products with an air-fuel equivalence ratio of 1. Thermally expanded graphite with a bulk density of 1.1 g/l, carbon content of over 99.9% and pH=7.0 was obtained.

The obtained thermally expanded graphite was placed in a mould sized 600 mm by 600 mm, and graphite foam was compressed one-dimensionally. The obtained material was characterized by the following properties: density 0.04 g/cm³, thermal conductivity perpendicular to plate: 1.3 W/mK, parallel to plate: 1.35 W/mK, flexural strength: 62 KPa, elasticity module (compression): 0.41 MPa.

### Example 3.

The method was performed according to Example 2, but prior to foaming, milled foil waste was added to hydrolyzed graphite nitrate particles in the amount of 3 mass %. Foaming was performed with a specific heat of 12 KJ/g, and compacting was conducted to a density of 0.1 g/cm³.

The obtained material was characterized by the following properties: thermal conductivity of plates perpendicular to plate: 1.6 W/mK, parallel to plate: 1.8 W/mK; flexural strength: 54 KPa, elasticity module (compression): 0.40 MPa.

## Claims

1. A method of producing a low-density thermally conductive material made of thermally expanded graphite that does not contain acid admixtures corrosive to metal, and whose water extract is **characterized by** neutral or basic pH values, **characterized in that** said method comprises the following stages:
(A) obtaining hydrolyzed graphite nitrate particles by chemical or electrochemical interaction of natural graphite with nitric acid and subsequent hydrolysis by washing with water;
(B) obtaining thermally expanded graphite particles by heating said hydrolyzed graphite nitrate particles washed with water at a specific heat equal to or exceeding 4.7 KJ/g but not exceeding 12 KJ/g in an atmosphere of liquid or gaseous fuel combustion products in the air with an air-fuel equivalence ratio λ of from 0.8 to 1.1 in terms of fuel;
(C) subsequently compacting the aforesaid thermally expanded graphite to an apparent density of from 0.03 to 0.1 g/cm³.

2. The method according to claim 1, **characterized in that** prior to heating at stage (B), particles of milled graphite foil waste are added to hydrolyzed graphite nitrate particles in an amount not exceeding 15 mass %.

3. The method according to claim 1, **characterized in that** heating at stage B is conducted with a specific heat of from 6 to 12 KJ/g.

4. The method according to claim 1, **characterized in that** compacting at stage C is performed to a density of 0.05-0.06 g/cm³.

5. The method according to claim 1, **characterized in that** compacting at stage C is performed by one-dimensional compression, preferably by rolling.

6. The method according to claim 5, **characterized in that** after stage C, a finishing processing is performed by way of cutting the material into cut-to-length workpieces.

7. The method according to claim 6, **characterized in that** at least two cut-to-length workpieces are subjected to joint compression to obtain a monolithic material.

8. A low-density thermally conductive material, **characterized in that** it is obtained in accordance with any of the preceding claims and that it does not contain acid admixtures corrosive to metal, and whose water extract is **characterized by** neutral or basic pH values.

9. The material according to claim 8, **characterized in that** it is made in the form of a long-length item with a width of up to 1,500 mm.

## Patentansprüche

1. Verfahren zur Herstellung eines niedrigdichten, thermisch leitfähigen Materials aus thermisch expandiertem Graphit, das keine sauren, metallkorrosiven Zusätze enthält und dessen Wasserextrakt durch neutrale oder basische pH-Werte **gekennzeichnet ist, dadurch** gekennzeichnet, dass das Verfahren die folgenden Schritte umfasst:
(A) Gewinnung von hydrolysierten Graphitnitratteilchen durch chemische oder elektrochemische Wechselwirkung von natürlichem Graphit mit Salpetersäure und anschließende Hydrolyse **durch** Waschen mit Wasser;
(B) Gewinnung von thermisch expandierten Graphitteilchen **durch** Erhitzen der mit Wasser gewaschenen hydrolysierten Graphitnitratteilchen bei einer spezifischen Wärme von 4,7 KJ/g oder mehr, jedoch nicht mehr als 12 KJ/g in einer Atmosphäre aus flüssigen oder gasförmigen Brennstoffverbrennungsprodukten in der Luft mit einem Luft-Brennstoff-Äquivalenzverhältnis λ von 0,8 bis 1,1, bezogen auf den Brennstoff;
(C) anschließendes Verdichten des vorgenannten thermisch expandierten Graphits auf eine Scheindichte von 0,03 bis 0,1 g/cm³.

2. Verfahren nach Anspruch 1, **dadurch gekennzeichnet, dass** vor dem Erhitzen in Schritt (B) Teilchen aus gemahlenen Graphitfolienabfällen zu den hydrolysierten Graphitnitratteilchen in einer Menge von höchstens 15 Masse-% zugegeben werden.

3. Verfahren nach Anspruch 1, **dadurch gekennzeichnet, dass** das Erhitzen in Schritt B mit einer spezifischen Wärme von 6 bis 12 KJ/g durchgeführt wird.

4. Verfahren nach Anspruch 1, **dadurch gekennzeichnet, dass** die Verdichtung in Schritt C bis zu einer Dichte von 0,05-0,06 g/cm³ durchgeführt wird.

5. Verfahren nach Anspruch 1, **dadurch gekennzeichnet, dass** die Verdichtung in Schritt C durch eindimensionale Kompression, vorzugsweise durch Walzen, erfolgt.

6. Verfahren nach Anspruch 5, **dadurch gekennzeichnet, dass** nach dem Schritt C eine Nachbearbeitung durch Ablängen des Materials in abgelängte Werkstücke durchgeführt wird.

7. Verfahren nach Anspruch 6, **dadurch gekennzeichnet, dass** mindestens zwei abgelängte Werkstücke einer gemeinsamen Verdichtung unterzogen werden, um ein monolithisches Material zu erhalten.

8. Niedrigdichtes, wärmeleitendes Material, **dadurch gekennzeichnet, dass** es nach einem der vorhergehenden Ansprüche hergestellt wird und keine sauren, metallkorrosiven Zusätze enthält, und dessen Wasserextrakt durch neutrale oder basische pH-Werte gekennzeichnet ist.

9. Material nach Anspruch 8, **dadurch gekennzeichnet, dass** es in Form eines Langstücks mit einer Breite von bis zu 1.500 mm hergestellt ist.

## Revendications

1. Procédé de production d'un matériau thermoconducteur de faible densité en graphite expansé thermiquement qui ne contient pas d'adjuvants acides corrosifs pour le métal, et dont l'extrait aqueux est **caractérisé par** des valeurs de pH neutres ou basiques, **caractérisé en ce que** ledit procédé comprend les étapes suivantes :
(A) obtenir des particules de nitrate de graphite hydrolysées par interaction chimique ou électrochimique du graphite naturel avec l'acide nitrique et hydrolyse subséquente par lavage à l'eau ;
(B) obtenir des particules de graphite expansées thermiquement en chauffant lesdites particules de nitrate de graphite hydrolysées lavées à l'eau à une chaleur spécifique égale ou supérieure à 4,7 KJ/g mais n'excédant pas 12 KJ/g dans une atmosphère de produits de combustion de combustibles liquides ou gazeux dans l'air avec un rapport d'équivalence air-combustible λ de 0,8 à 1,1 en termes de combustible ;
(C) compacter ensuite le graphite thermiquement expansé susmentionné à une densité apparente de 0,03 à 0,1 g/cm³.

2. Procédé selon la revendication 1, **caractérisé en ce que**, avant le chauffage à l'étape (B), des particules de déchets de feuilles de graphite broyées sont ajoutées aux particules de nitrate de graphite hydrolysées en une quantité ne dépassant pas 15 % en masse.

3. Procédé selon la revendication 1, **caractérisé en ce que** le chauffage à l'étape B est réalisé avec une chaleur spécifique de 6 à 12 KJ/g.

4. Procédé selon la revendication 1, **caractérisé en ce que** le compactage à l'étape C est effectué jusqu'à une densité de 0,05-0,06 g/cm³.

5. Procédé selon la revendication 1, **caractérisé en ce que** le compactage à l'étape C est réalisé par compression unidimensionnelle, de préférence par laminage.

6. Procédé selon la revendication 5, **caractérisé en ce qu'**après l'étape C, un traitement de finition est effectué en coupant le matériau en pièces coupées à longueur.

7. Procédé selon la revendication 6, **caractérisé en ce qu'**au moins deux pièces coupées à longueur sont soumises à une compression conjointe pour obtenir un matériau monolithique.

8. Matériau thermoconducteur de faible densité, **caractérisé en ce qu'**il est obtenu selon l'une quelconque des revendications précédentes et qu'il ne contient pas d'adjuvants acides corrosifs pour le métal, et dont l'extrait aqueux est **caractérisé par** des valeurs de pH neutres ou basiques.

9. Matériau selon la revendication 8, **caractérisé en ce qu'**il est réalisé sous la forme d'une pièce longue d'une largeur allant jusqu'à 1 500 mm.
